Europäisches Patentamt

European Patent Office

Office européen des brevets

(11) Numéro de publication: **0 055 151 B1**

(12) **FASCICULE DE BREVET EUROPEEN**

(45) Date de publication du fascicule du brevet: **17.04.85**

(21) Numéro de dépôt: **81401844.6**

(22) Date de dépôt: **20.11.81**

(51) Int. Cl.⁴: **G 01 S 13/78**

(54) **Dispositif de détection des signaux de répondeurs radar, et radar secondaire comprenant un tel dispositif.**

(30) Priorité: **23.12.80 FR 8027316**

(43) Date de publication de la demande:
**30.06.82 Bulletin 82/26**

(45) Mention de la délivrance du brevet:
**17.04.85 Bulletin 85/16**

(84) Etats contractants désignés:
**DE GB IT NL SE**

(56) Documents cités:
**EP-A-0 053 963**
**DE-A-2 159 317**
**FR-A-2 424 547**

(73) Titulaire: **THOMSON-CSF**
**173, Boulevard Haussmann**
**F-75379 Paris Cedex 08 (FR)**

(72) Inventeur: **Madec, Jean-Pierre**
**THOMSON-CSF SCPI 173, bld Haussmann**
**F-75360 Paris Cedex 08 (FR)**
Inventeur: **Gaultier, Gérard**
**THOMSON-CSF SCPI 173, bld Haussmann**
**F-75360 Paris Cedex 08 (FR)**
Inventeur: **Devolder, Claude**
**THOMSON-CSF SCPI 173, bld Haussmann**
**F-75360 Paris Cedex 08 (FR)**

(74) Mandataire: **Benoit, Monique et al**
**THOMSON-CSF SCPI 173, Bld Haussmann**
**F-75379 Paris Cedex 08 (FR)**

Courier Press, Leamington Spa, England.

## Description

L'invention se rapporte aux systèmes radar de surveillance de l'espace aérien comprenant un radar primaire et un radar secondaire; elle concerne plus précisément un dispositif électronique permettant de détecter, à la sortie du récepteur du radar secondaire, les signaux transmis par les répondeurs des avions situés à l'intérieur de l'espace aérien surveillé par le système.

Dans un système de surveillance de l'espace aérien, le radar secondaire interroge les avions équipes de répondeurs coopératifs, ceux-ci, en retour, émettent des réponses que leur sont propres, permettant ainsi de les distinguer entre eux. Les fondements des radars secondaires et les conventions internationales s'y rapportant, sond donnés, notamment, dans l'ouvrage de M. I. Skolnik "Radar Handbook", Chapitre 38, MrGraw Hill (1971).

Les réponses transmises par les répondeurs disposés à bord des avions sont constitués par un train d'impulsions toutes identiques, comprenant un nombre N d'impulsions de code qui forment un mot numérique, ces impulsions de code sont parenthésées par deux impulsions d'encadrement permettant de reconnaître la présence d'une réponse et, conjointement, d'identifier le début et la fin du mot. La durée et l'espacement relatif de chacune des impulsions qui constituent une réponse sont parfaitement définies. Au sol, ces réponses sont captées par l'antenne du radar secondaire puis, amplifiées et démodulées par le récepteur correspondant, enfin elles sont détectées en vue de leur exploitation ultérieure par le système. C'est la fonction du dispositif de détection de reconnaître la présence de réponses, de détecter les impulsions de code incluses dans ces réponses puis de convertir ces impulsions de code sous la forme d'un mot parallèle. En outre, le dispositif de détection doit fournir des informations complémentaires permettant, soit de valider le code détecté ou de signaler la présence de réponses imbriquées ayant un certain recouvrement des impulsions des réponses. Ce phénomène d'imbrication et de recouvrement des réponses est connu dans la littérature anglo-saxonne comme le phénomène de "garbling".

L'opération permettant de détecter les impulsions de code incluses dans les réponses soulève plusieurs difficultés résultant notamment: de la présence à la sortie du récepteur de réponses asynchrones issues de répondeurs interrogés par d'éventuels radars secondaires adjacents; de la large dynamique d'amplitude des réponses, liée auf paramètres de gain de la liaison air-sol; de la présence simultanée de réponses issues d'avions groupés: des interférences électromagnétiques possibles et du bruit thermique propre du récepteur.

Des dispositifs permettant de détecter, à la sortie du récepteur du radar secondaire, les réponses des avions interrogés, ont déjà été réalisés; ces dispositifs de l'art antérieur opèrent par détection de la coïncidence des impulsions d'encadrement des réponses, la première impulsion d'encadrement étant préalablement décalée d'une quantité égale au décalage de temps relatif de ces deux impulsions. L'inconvénient de ces dispositifs actuels réside dans le faible pouvoir de résolution temporel avec, pour conséquence: une absence de détection des réponses ou une détection erronée des informations de code lorque plusieurs réponses sont superposées et, notamment, lorsqu'il se produit un chevauchement plus ou moins partiel de ces réponses.

Le but de l'invention est de fournir un dispositif de détection des réponses de radar secondaire dont le pouvoir de résolution soit notablement accru, autorisant ainsi une meilleure probabilité de détection du code de réponse.

Pour atteindre ce but, le dispositif selon l'invention comprend les éléments suivants: des moyens de mise en forme des signaux vidéofréquence du récepteur, connectés en série avec un circuit de retard dont la durée de retard est sensiblement égale au décalage de temps relatif des flancs avant des impulsion d'encadrement des réponses, ce circuit de retard étant muni, en outre, d'une pluralité de sorties intermédiaires toutes équidistantes; connectés aux extrémités du circuit de retard, deux détecteurs de transition permettant de détecter les positions des flancs avant et arrière des impulsions d'encadrement; deux détecteurs de coïncidence permettant de détecter la coïncidence des positions respectives des flancs avant et arrière des impulsions et deux circuits de mémorisation connectés en parallèle aux prises de sorties intermédiaires du circuit de retard, permettant de stocker temporairement les valeurs des codes détectés séquentiellement sur les flancs avant et arrière des impulsions des réponses.

Selon une autre caractéristique de l'invention, le dispositif de détection comprend un comparateur numérique connecté entre les sorties des deux circuits de mémorisation permettant de détecter l'identité des codes détectés sur les flancs avant et arrière des impulsions des réponses et de fournir un signal de validation de ces codes détectés.

Selon une autre caractéristique, le décalage de temps relatif entre les positions des flancs avant et arrière consécutifs sont évaluées pour fournir une indication de chevauchement éventuel des impulsions des réponses.

Selon encore une autre caractéristique, les données stockées dans les deux circuit de mémorisation sont lues et transférées séquentiellement vers les circuits de décodâge du code des réponses.

D'autres caractéristiques et avantages apparaîtront dans la description détaillée d'un mode de réalisation d'un dispositif de détection conforme à l'invention, faite en regard des dessins annexés; sur ces dessins:

— la figure 1 représente la forme de la réponse transmise par un répondeur de radar secondaire,

— la figure 2 représente la forme des signaux en impulsions constituant les réponses,

— la figure 3 représente, sous la forme d'un schéma synoptique, un dispositif de détection de l'art antérieur,

— la figure 4 représente, sous la forme d'un schéma synoptique, un mode de réalisation d'un dispositif de détection conforme à l'invention,

— la figure 5 représente, sous la forme d'un schéma synoptique, un exemple de réalisation d'un dispositif de quantification des signaux de sortie du récepteur,

— la figure 6 représénte, sous la forme d'un schéma synoptique, un exemple de réalisation d'un détecteur de transition,

— la figure 7 représente, sous la forme d'un schéma synoptique, un exemple de réalisation d'un discriminateur de temps,

— la figure 8 représente la forme des principaux signaux générés par le dispositif de détection de la figure 4, dans le cas de réponses isolées,

— les figures 9a à 9d représentant la forme des principaux signaux générés par le dispositif de la figure 4, dans différents cas de réponses superposées,

— la figure 10 représente, sous la forme d'un schéma synoptique, une variante de réalisation du circuit de retard (12) inclus dans le dispositif de détection de la figure 4,

— la figure 11 représente, sous la forme d'un schéma synoptique, une variante de réalisation d'un détecteur de transition inclus dans le dispositif de détection de la figure 4,

— la figure 12 représente, sous une forme simplifiée, selon une technique numérique, un mode de réalisation du circuit de retard inclus dans le dispositif de détection de la figure 4.

Dans les systèmes radar de surveillance de l'espace aérien, comprenant un radar primaire assisté d'un radar secondaire, les avions en vol dans le domaine de portée du système sont identifiés ou distingués par leur route, mais aussi par les réponses qu'ils sont susceptibles de fournir consécutivement à leur interrogation par le radar secondaire.

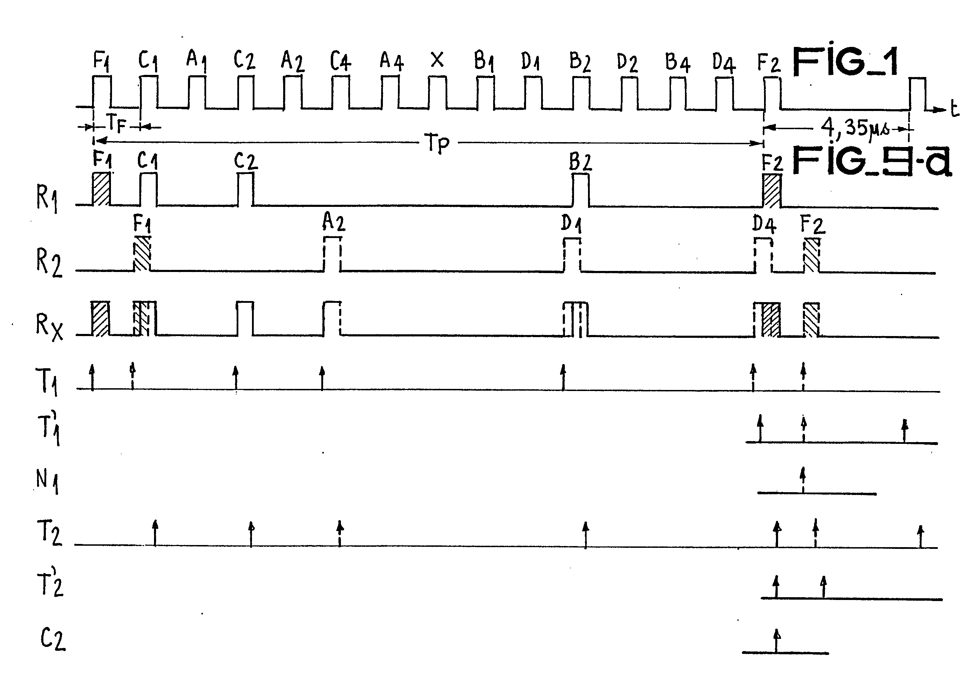

La figure 1 représente la forme du signal de réponse transmis par le répondeur installé à bord des avions. Les caractéristiques de ce signal de réponse doivent être en accord avec les Recommandations émises par l'O.A.C.I. (Organisation Aéronautique Civile Internationale). Selon ces recommandations un signal de réponse comporte quinze fentes intervalles de temps d'une durée nomibale $T_F$ de 1,45 µs, à l'intérieur de ces fentes de temps sont positionnées des impulsions binaires dont la durée nominale est de 0,45 µs. Elles sont identifiées par les lettres majuscules indexées $F_1$, $C_1$ ... $D_4$ et $F_2$, la fente de temps centrale X est normalement toujours "non occupée". Les deux impulsions extrêmes $F_1$ et $F_2$

positionnées respectivement dans les première et quinzième fentes de temps assurent le parenthésage du signal de réponse; elles sont appelées impulsions d'encadrement ou encore impulsions de trames, le temps $T_p$ séparant ces deux impulsions d'encadrement est dont de 20.3 µs. Les douze autres impulsions, en excluant l'impulsion X, forment le code de la réponse, ou plus brièvement le code. De la combinaison de la présence ou de l'absence de ces douze impulsions de code, 4096 réponses différentes peuvent être formées, ces réponses étant indicatives de différents para mètres, tels que l'altitude, l'identité, le statut, etc ...des avions interrogés. Eventuellement, une fente de temps supplémentaire, distante de 4,35 µs de l'impulsion d'encadrement $F_2$ est réservée pour la transmission d'une impulsion particulière, appelée impulsion "SPI". La durée totale du signal de réponse est donc d'environ 25 µs correspondant à une distance radar de l'ordre de 4 km. Dans le cas d'un avion isolé et en l'absence d'interférences électromagnétiques, la réponse de cet avion peut être facilement détectée à la sortie du récepteur de la station sol, puis ultérieurement décodée pour fournir l'information du paramètre propre à cet avion. Si deux ou plusieurs avions se trouvent simultanément dans le domaine d'interrogation du radar secondaire, et si la différence de leur distance radiale respective à ce radar est inférieure à 4 km, alors, dans une certaine mesure, les impulsions des réponses fusionnent dans le récepteur. Ce phénomène est particulièrement fréquent dans les situations où le trafic aérien dans l'espace surveillé est intense et les avions sont physiquement séparés par leur étagement vertical. Compte tenu du facteur de forme des impulsions fournies à la sortie du récepteur, de l'ordre de 1:2 dans la pratique, il existe une probabilité élevée de chevauchement des impulsions du signal composite avec, comme conséquence, une certaine confusion dans les réponses, ou des réponses erronées ou encore l'absence de réponses détectées.

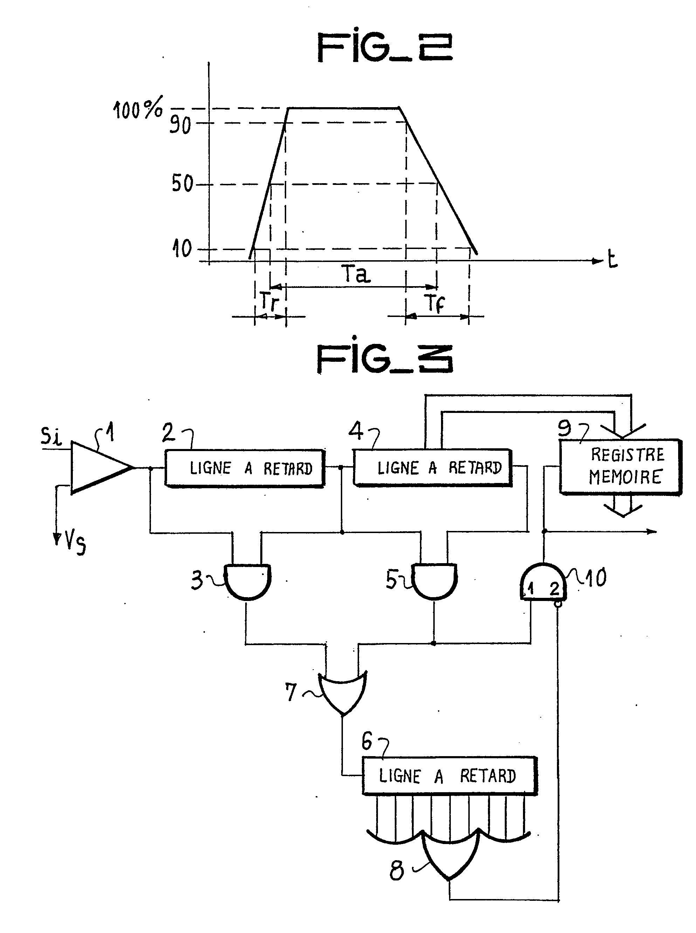

La figure 2 représente la forme des impulsions qui forment le signal de réponse transmis par le répondeur des avions. Ces impulsions, toutes identiques, sont de forme trapézoïdale; la durée de montée $T_r$ du front avant mesurée entre les niveaux 10% et 90% du palier est au plus égale à 0,1 µs et au moins égale à 0,05 µs, tandis que la durée $T_f$ mesurée dans les mêmes conditions est au plus égale à 0,2 µs et au moins égale à 0,05 µs; la durée $T_d$ des impulsions mesurée au niveau de 50% est égale à 0,45±0,1 µs. A la sortie du récepteur du radar secondaire, la forme des impulsions reçues peut être sensiblement modifiée, notamment la durée effective de ces impulsions peut être légèrement accure et l'amplitude des impulsions d'un signal de réponse peut varier dans certaines limites fonction des caractéristiques d'amplification du récepteur. Dans les situations où plusieurs réponses su superposent plus ou moins partiellement, il se produit un élargissement de la durée des impulsions élémentaires et l'un des deux flancs d'une impulsion peut être masqué par la présence d'une impulsion adjacente. De plus, les amplitudes des réponses superposées peuvent varier dans certaines limites dues notamment à la non isotropie des diagrammes de rayonnement des antennes des répondeurs.

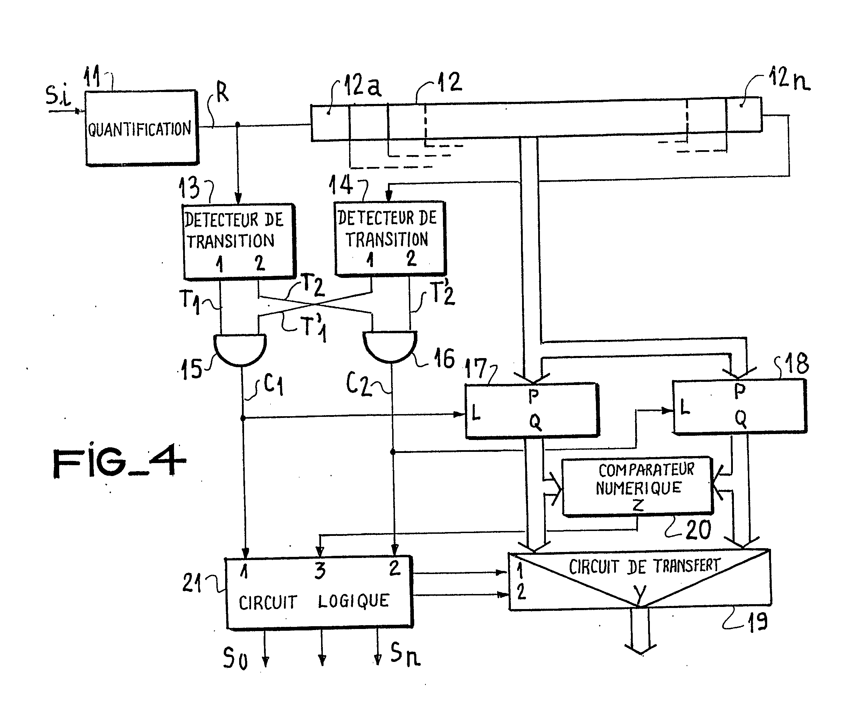

La figure 3 représente, sous la forme d'un schéma synoptique, un dispositif de détection de l'art antérieur; ce dispositif de détection comprenant les éléments suivants:

— un circuit permettant de quantifier les signaux en impulsions de la réponse, ce circuit de quantification comprenant essentiellement un comparateur de niveau (1) à deux états de sortie, dont l'entrée de signal est reliée à la sortie vidéofréquence du récepteur du radar secondaire et l'entrée de référence est reliée à une source de tension continue (Vs) fixe ou asservie au niveau du bruit de sortie de ce récepteur; le signal de sortie du récepteur étant identique à celui décrit précédemment.
— deux lignes à retard de durée $T_p$, qui sont connectées en série, une première ligne à retard (2) dont l'entrée et la sortie sont reliées à une première porte logique (3) du type "ET", et une seconde ligne à retard (4) dont l'entrée et la sortie sont reliées à une seconde porte logique (5) du type "ET", cette second ligne à retard comportant N sorties intermédiaires équidistantes d'une durée $T_F$.
— une troisième ligne à retard (6) comportant également N sorties intermédiaires équidistantes d'une durée $T_F$, l'entrée de cette troisième ligne à retard est reliée aux sorties des première et seconde portes logiques précédentes par l'intermédiaire d'une première porte logique (7) du type "OU" et les sorties intermédiaires sont reliées à une second porte logique (8) du type "OU",
— un registre mémoire (9) dont les entrées de signal sont reliées en correspondance aux sorties intermédiaires de la seconde ligne à retard, ce registre mémoire comportant une entrée de chargement et des sorties de signal,
— une troisième porte logique (10) du type "ET" dont une première entrée ets reliée à la sortie de la seconde porte logique du type "ET" et une seconde entrée complémentée est reliée à la sortie de la seconde porte logique du type "OU".

Cet extracteur de l'art antérieur du type analogique décrit ci-dessus a été réalisé sous différentes variantes, notamment, du type numérique dans lesquelles les lignes à retard sont constituées par des registres à décalage incrémentés par un signal d'horloge asynchrone.

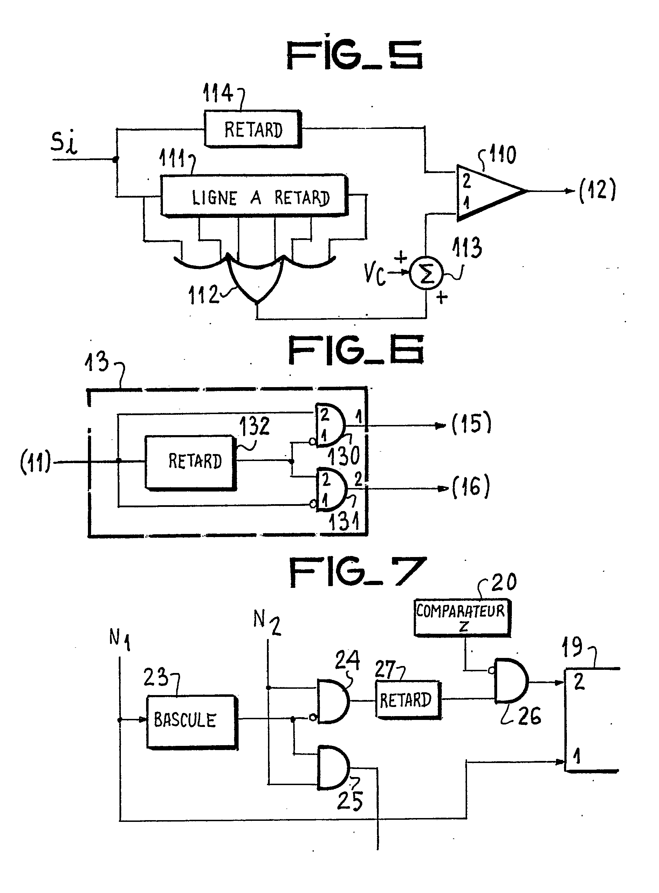

La figure 4 représente, sous la forme d'un schéma synoptique, un mode de réalisation d'un dispositif de détection de réponses, conforme à l'invention; ce dispositif de détection comprenant les éléments suivants:

— un circuit de quantification (11) des signaux d'entrée ($S_i$) fournis par le récepteur du radar secondaire; ce circuit de quantification comprenant généralement un comparateur de niveau à deux états de sortie: un niveau haut et un niveau bas selon que l'amplitude du signal de sortie est supérieure ou inférieure à un niveau de quantification fixe ou asservi à l'amplitude instantanée de ces signaux d'entrée,
— un circuit de retard (12) dont la durée de retard est égale au décalage de temps $T_p$ séparant les deux impulsions d'encadrement $F_1$ et $F_2$, l'entrée de ce circuit de retard étant connectée à la sortie du circuit de quantification (11); ce circuit de retard étant, en outre, constitué d'une pluralité de cellules ($12_a$ à $12_n$) connectées en série, la durée de retard de chacune des cellules étant égale à la durée $T_F$ d'une fenêtre de temps, le nombre de cellules étant égal à (N−1) où N est le nombre de fentes de temps de la réponse et chacune de ces cellules comportant une sortie,
— deux détecteurs de transition du niveau des impulsions présentes à l'entrée et la sortie du circuit de retard: un premier détecteur de transition (13) et un second détecteur de transition (14) reliés respectivement à l'entrée et à la sortie du circuit de retard (12); ces deux détecteurs comportant chacun deux sorties; des premières sorties correspondant aux transitions des flancs avant des impulsions et des secondes sorties correspondant aux transitions des flancs arrière des impulsions,
— deux détecteurs de coïncidence des transitions représentés schématiquement par des portes logiques du type "ET": un premier (15) et un second (16) détecteur de coïncidence dont les entrées sont respectivement reliées aux premières et secondes sorties des détecteurs de transitions,
— deux registres mémoire permettant de stocker temporairement les niveaux des (N−2) impulsions de code; un premier (17) et second (18) registres mémoire comportant des entrées de signal (P) communes reliées respectivement aux sorties intermédiaires correspondantes du circuit de retard (12); ces premier et second registres mémoire comportant en outre: des entrées de chargement (4) reliées respectivement aux sorties des premier et second détecteurs be coïncidence et des sorties de signal (Q),
— un circuit de transfert (19) du contenu des registres mémoire, ce circuit de transfert comportant, par exemple, une première et une seconde entrées de commande permettant de transmettre séquentiellement le contenu des premier et second registres; les signaux de sortie pouvant être fournis, à un décodeur actif, non représenté sur la figure,
— un comparateur numérique (20) dont les entrées sont connectées repsectivement aux sorties (Q) correspondantes des deux registres de mémoire; ce comparateur comportant une sortie (Z) qui délivre un signal lorsque les contenus des deux registres mémoire ont une valeur identique,
— un circuit logique (21) sensible aux signaux de sorties des détecteurs de coïncidence (15 et 16) et à la sortie du comparateur numérique (20); ce circuit logique élabore, d'une part, des signaux d'adressage du circuit de transfert (19) et une pluralité de signaux de sortie ($S_o \ldots S_n$) représentatifs du niveau de confiance qui pourra être attribué à la réponse détectée, comme il sera expliqué ultérieurement.

Un détecteur de code pour système d'interrogation/réponse, comportant un circuit de quantification des signaux d'entrée, un circuit de retard à plusieurs cellules, deux détecteurs de transition des flancs des impulsions, deux détecteurs de coïncidence des transitions, deux registres mèmoires et un circuit de transfert tels que précédemment décrits, est décrit dans la demande de brevet français 2 424 547.

On décrira maintenant, à titre illustratif, un exemple de réalisation du circuit de quantification (11) représenté sur la figure 5, sous la forme d'un schéma synoptique simplifié, ce circuit de quantification comprenant les éléments suivants:

— deux voies de formation de signal comportant une entrée commune reliée au signal d'entrée ($S_i$) et des sorties reliées respectivement aux entrées d'un comparateur de niveau (110) à deux états de sortie, l'une des voies de formation de signal constituant la voie de référence et comprenant, connectée en série, une ligne à retard (111) munie de prises équidistantes, ces prises étant reliées aux entrées d'un opérateur logique (112) linéaire du type "OU", dont la sortie représente l'amplitude simultanément présente sur les entrées tel que décrit dans la demande de brevet européen publiée sous le numéro 0 053 963, un circuit de sommation (113) dont l'autre entrée reçoit une tension continue ($V_c$) fixe ou fonction de la distance radar des réponses, l'autre voie constituant la voie signal et comportant essentiellement un circuit de retard (114).

Le rapport des gains des voies de formation de signal détermine le niveau de quantification des signaux d'entrée ce qui assure que la durée des signaux quantifiés de sortie soit indépendante de l'amplitude. Ce circuit de quantification comprend généralement, connecté à la sortie du comparateur de niveau (110), un discriminateur de durée d'impulsion, comme connu en soi, qui rejette toutes les impulsions de sortie du comparateur dont la durée est inférieure à une quantité prédéterminée, par exemple, 0,3 μs.

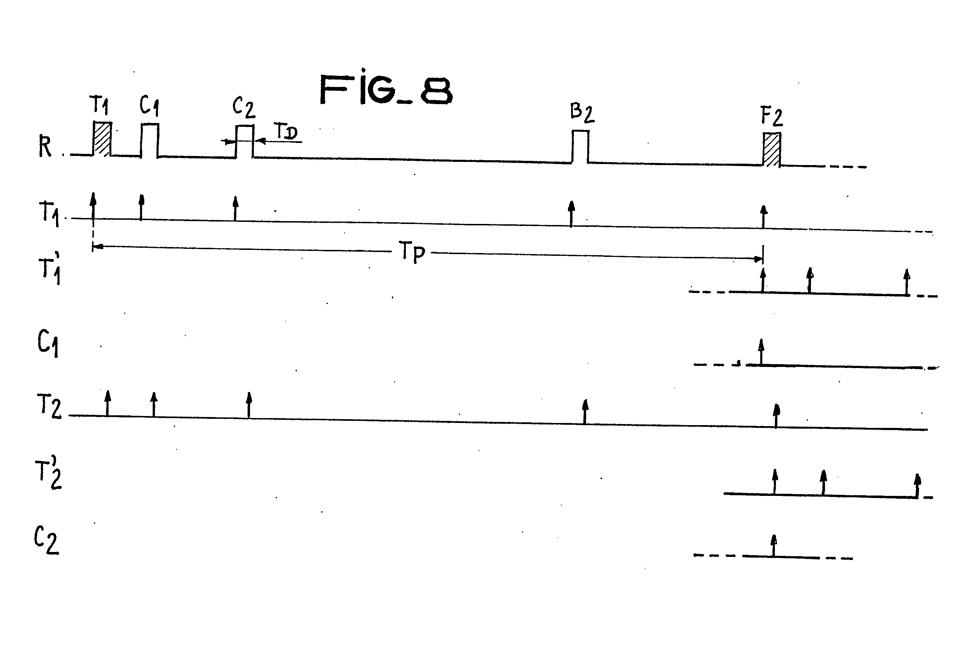

La figure 6 représente un mode de réalisation d'un détecteur de transition des impulsions permettant de détecter la position des flancs des impulsions des réponses et notamment la position des flancs des impulsions d'encadrement $F_1$ et $F_2$; ce détecteur de coïncidence comprenant les éléments suivants:

— deux portes logiques du type "ET" comportant chacune une entrée complémentaire: une première porte (130) et une second porte (131), les premières et les secondes entrées étant communes, les premières entrées étant reliées directement à l'entrée de ce détecteur de coïncidence et les secondes entrées étant reliées à l'entrée de ce détecteur de coïncidence par l'intermédiaire d'un circuit de retard (132) dont la durée de retard $\Delta\tau$ conditionne le pouvoir de résolution du dispositif de détection; ce circuit de retard peut être un réseau passe-bas, par exemple, du type résistance-capacité. Les deux détecteurs de transition (13 et 14) peuvent être réalisés de façon identique.

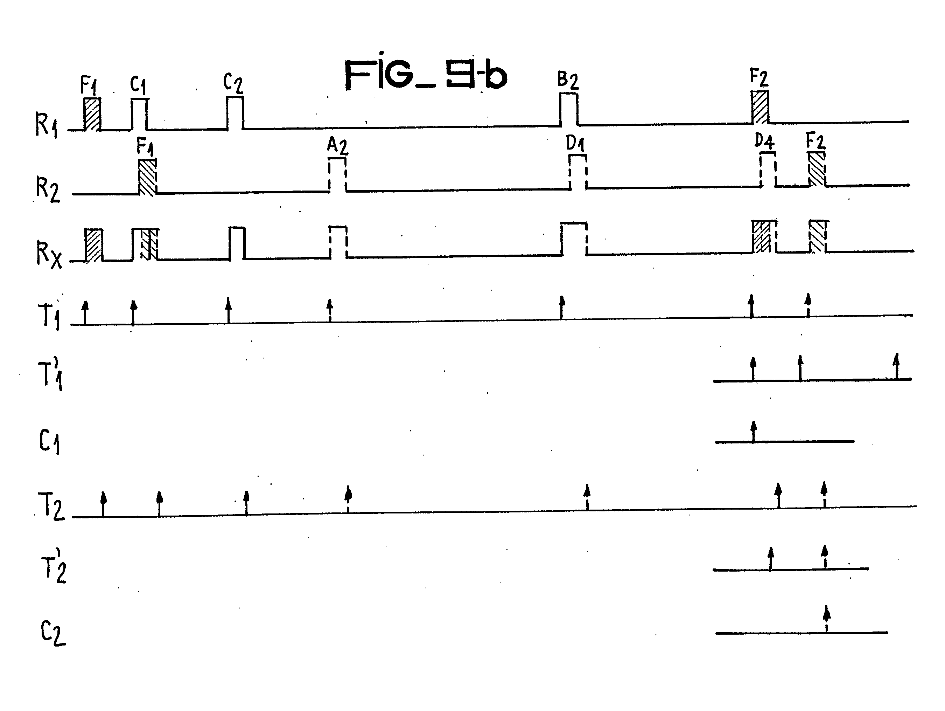

La fonction principale du circuit logique (21) étant, notamment, d'évaluer le décalage de temps entre les signaux de coïncidence des flancs avant et arrière des impulsions d'encadrement, ce circuit logique comprend un discriminateur de temps qui peut être réalisé sous une forme représentée à la figure 7. Ce discriminateur de temps comprend: une bascule monostable (23) dont l'entrée de commande reçoit les signaux de sortie du premier détecteur de coïncidence (15), la durée de basculement de cette bascule étant égale ou légèrement supérieure à la durée nominale des impulsions des réponses; deux portes logiques du type "ET", une première porte (24) comportant une entrée complémentée et une seconde porte (25), les premières entrées de ces portes étant connectées à la sortie de la bascule monostable (23) et à la sortie et de secondes entrées recevant les signaux de sortie du second détecteur de coïncidence (14); une porte d'inhibition (26) dont une première entrée esm connectée par l'intermédiaire d'un circuit de retard (27) à la sortie de la porte (24), une second entrée est connectée à la sortie (Z) du comparateur numérique (20), et une sortie qui est connectée à une entrée de commande du circuit de transfert (19). Le signal de sortie de la porte (25) fournit l'indication que la réponse détectée est isolée ou éventuellement est une réponse entrelacée sans chevauchement.

Le fonctionnement du dispositif de détection représenté sur la figure 4 sera décrit en regard des figures (8, 9a à 9d) qui représentent les chronogrammes des principaux signaux pour différentes situations des réponses.

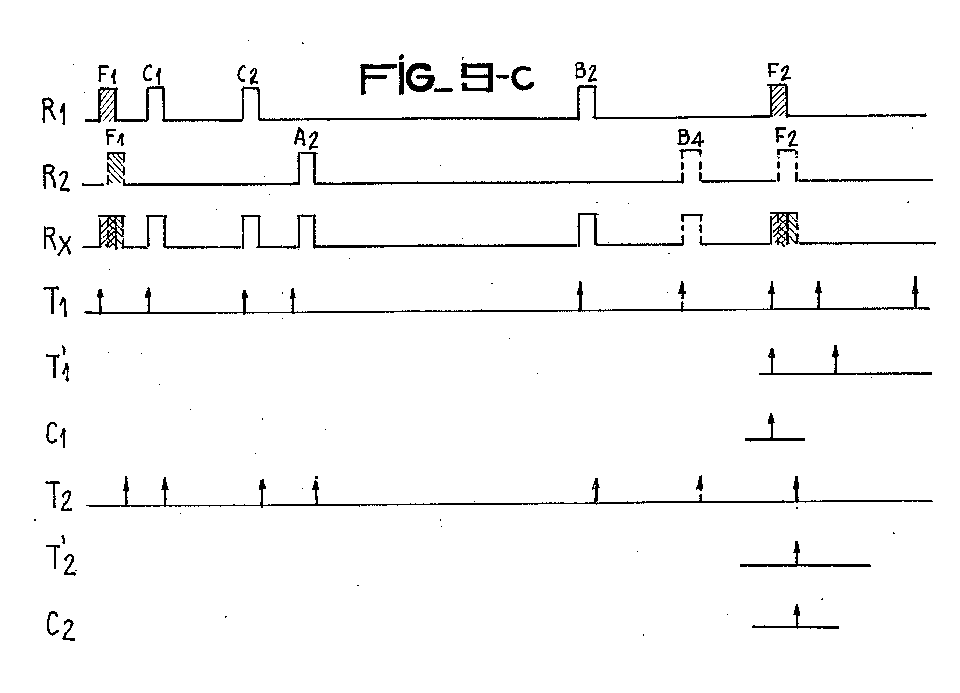

La figure 8 représente une réponse R isolée fournie par le circuit de quantification (11), cette réponse comprenant les impulsions d'encadrement $F_1$ et $F_2$ et les impulsions de code $C_1$, $C_2$ et $B_2$ au niveau haut. Les signaux de transition $T_1$ fournis sur la première sortie du premier détecteur de transition (13) des impulsions sont représéntés par des "pics" en phase avec les flancs avant des impulsions de la réponse. Les signaux de transition $T_1'$ fournis sur la première sortie du second détecteur de transition (14) sont identiques aux signaux de transition $T_1$ mais décalés dans le temps d'une quantité $T_p$. Les signaux de coïncidence $C_1$, à la sortie du premier détecteur de coïncidence (15), sont un "pic" unique en phase avec le flanc avant de l'impulsion d'encadrement $F_2$. Les signaux de transition $T_2$ et $T_2'$ fournis sur les secondes sorties des détecteurs de coïncidence (13 et 14) sont identiques aux signaux $T_1$ et $T_1'$ mais décalés dans le temps d'une quantité $T_D$ égale à la durée des impulsions. Les signaux de coïncidence $C_2$ à la sortie du second circuit de coïncidence est un pic unique en phase avec le flanc arrière de l'impulsion d'encadrement $F_2$. Les signaux de coïncidence $C_1$ et $C_2$ commandent respectivement le chargement des deux registres mémoires (17 et 18), les grandeurs numériques ainsi stockées sont comparées dans le comparateur (20) qui fournit un signal ou non si ces grandeurs sont identiques ou différentes. Le signal $C_1$, conjointement par l'intermédiaire du circuit logique (21), permet de fournir, à la sortie (Y) du circuit de transfert (19) le code détecté et enregistré dans le premier registre mémoire (17). D'un autre côté, le circuit logique (21) mesure le décalage de temps entre les impulsions de coïncidence $C_1$ et $C_2$, si ce décalage de temps est inférieur à une quantité prédeterminée, par exemple, sensiblement plus grande que la durée nominale d'une impulsion, ce circuit logique génère un signal de sortie ($S_o$) indiquant que les flancs avant et arrière de l'impulsion d'encadrement $F_1$ ont été détectés. A cet instant, deux cas peuvent se présenter: dans un premier cas, les contenus des deux registres sont identiques et le comparateur fournit un signal de sortie, alors le circuit logique génère un signal ($S_o$) de validation de la réponse détectée; dans un second cas, les contenus des deux registres sont différents, alors sous l'action du signal de coïncidence $C_2$, le contenu du second registre mémoire (18) est transféré à la sortie (Z) du circuit de transfert (19) et le circuit logique génère un signal de sortie ($S_n$) indiquant une détection ambigüe.

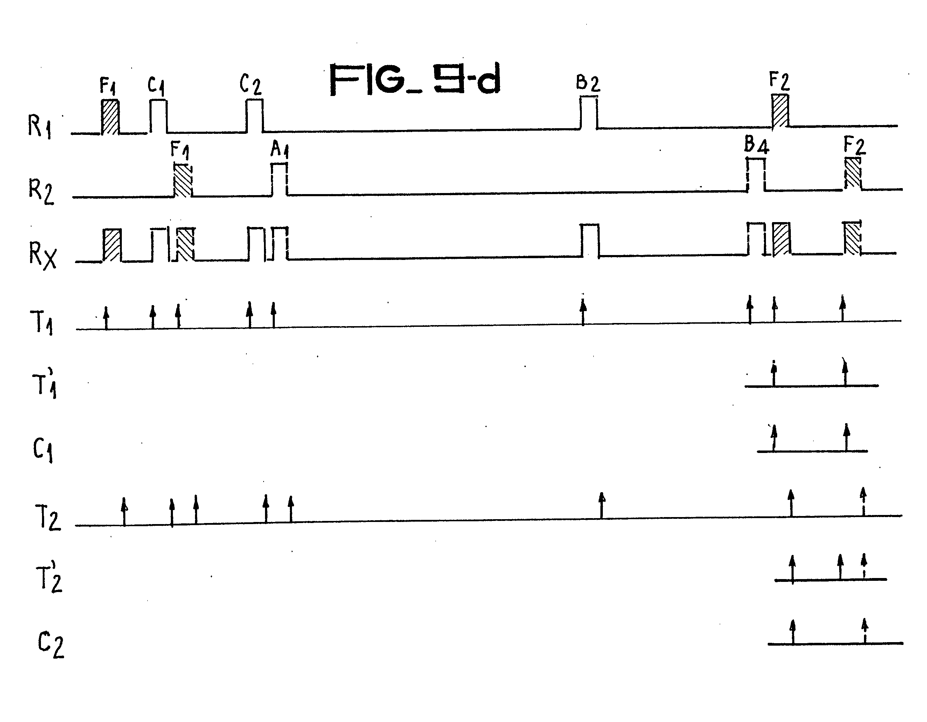

La figure 9a se rapporte à une situation dans laquelle une première réponse $R_1$ ($C_1$, $C_2$ et $B_2$) et une seconde réponse $R_2$ ($A_2$, $D_1$ et $D_4$) se superposent dans le temps et donnent naissance à un signal composite $R_x$ avec chevauchement partiel des impulsions, notamment, le flanc arrière de l'impulsion d'encadrement $F_1$ de la réponse $R_2$ est masqué par l'impulsion de code $C_1$ de la réponse $R_1$ et le flanc avant de l'impulsion $F_2$ de la réponse $R_1$ est éclipse par l'impulsion de code $D_4$ de la réponse $R_2$. Dans cette situation, le signal de coïncidence $C_1$ comporte un pic unique en phase avec le flanc avant de l'impulsion d'encadrement $F_2$ de la réponse $R_2$ et le signal de coïncidence $C_2$ comporte un pic unique en phase avec le flanc arrière de l'impulsion d'encadrement $F_2$ de la réponse $R_1$. Il en résulte que le circuit logique (21) génère un signal ($S_2$) indiquant la superposition des réponses avec chevauchement. Le premier registre mémoire, sous l'action du signal de

coïncidence $C_2$ enregistre le code de la réponse $R_1$ et le second registre mémoire sous l'action du signal de coïncidence $C_1$ enregistre le code de la réponse $R_2$, le contenu de ces deux registres mémoire étant transféré séquentiellement et le décalage de temps entre les signaux $C_1$ et $C_2$ étant supérieur à la largeur nominale $T_D$ des impulsions de la réponse, la sortie (Z) du comparateur (20) n'est pas prise en compte par le circuit logique (21).

La figure 9b se rapporte à une situation similaire à la précédente, le sens de chevauchement des impulsions d'encadrement $F_1$ et $F_2$ étant inversé.

La figure 9c se rapporte à une situation particulière dans laquelle les impulsions d'encadrement $F_1$ et $F_2$ des deux réponses $R_1$ et $R_2$ se chevauchent mutuellement. Dans cette situation, un seul flanc des impulsions d'encadrement $F_1$ et $F_2$ est détecté; lorsque le chevauchement est important, le circuit logique (21) peut générer un signal de sortie ($S_o$) indiquant qu'une réponse unique a été détectée; toutefois, l'opération de comparaison effectuée par le comparateur numérique (20) indiquera alors que les contenus des registres mémoires sont différents et, ainsi, autorisera le transfert séquentiel des codes des réponses $R_1$ et $R_2$.

La figure 9d se rapporte à une situation dans laquelle deux réponses $R_1$ et $R_2$ sont entrelacées, c'est-à-dire superposées, sans chevauchement des impulsions de ces réponses; cette situation est identique à celle de réponses isolées.

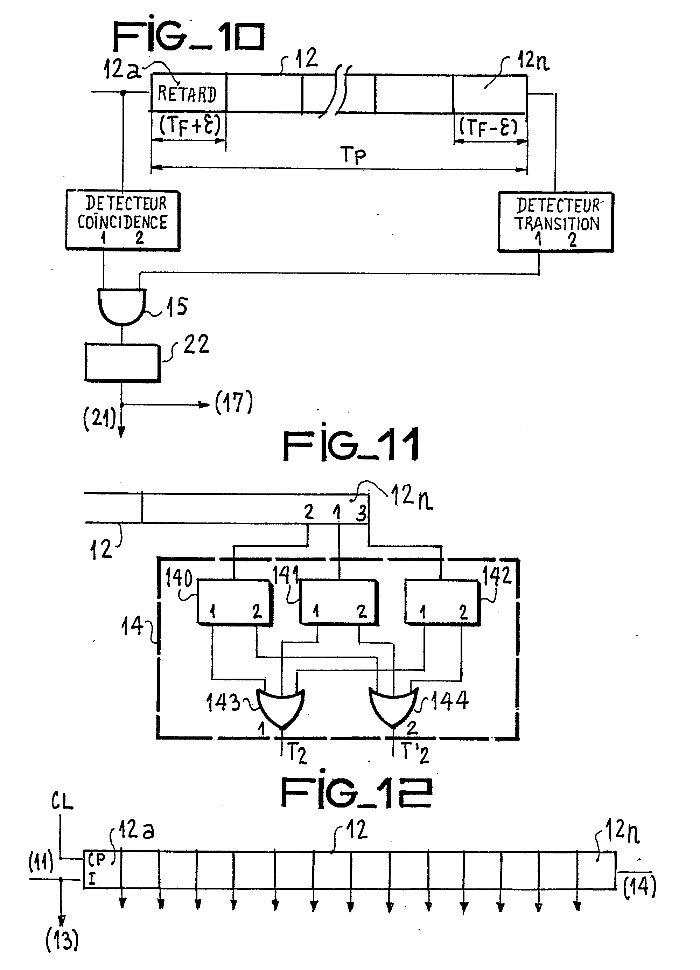

Lors de la réalisation du dispositif décrit à la figure 4, il est nécessaire de prendre en compte l'écart de position toléré $\varepsilon$ sur la position des flancs des impulsions de code dans les fenêtres de temps de le réponse. Pour ce faire, la phase des signaux de coïncidence $C_1$ doit être retardée d'une quantité prédéterminée égale à cet écart de position toléré et inversement la phase des signaux de coïncidence $C_2$ doit être avancée d'une quantité équivalente. A cet effet, comme représenté sur la figure 10, d'une part la durée de retard de la première cellule de retard (12a) di circuit de retard (12) est accrue de la grandeur de cet écart et un circuit de retard supplémentaire (22) d'une durée de retard égale au double de cette quantité déterminée est inséré à la sortie du détecteur de coïncidence (13) et, d'autre part, la durée de retard de la dernière cellule de retard ($12_n$) est réduite de cette quantité prédéterminée.

Le décalage de temps relatif $T_p$ séparant la position des flancs avant des impulsions d'encadrement $F_1$ et $F_2$ est spécifiée avec une certaine tolérance maximale $\Delta T_p$, le décalage de temps $T_p$ étant fixe, certaines réponses ne seraient pas détectées par le dispositif de détection décrit Figure 4.

La figure 11 représente un moyen permettant de prendre en compte cette tolérance $\Delta T_p$. Sur cette figure, la dernière cellule ($12_n$) du circuit de retard (12) comporte trois sorties: une première sortie (11) correspond au décalage de temps nominal $T_p$ et deux sorties adjacentes (2 et 3) distantes de la grandeur $\Delta T_p$. Ces trois sorties sont connectées au détecteur de transition (14) qui comprend, alors, trois détecteurs de transition (140, 141 et 142) dont les sorties sont respectivement reliées aux entrées de deux portes logiques du type "OU", une première (143) et une seconde (144) portes dont les sorties délivrent respectivement trois signaux de transition $T_2$ et trois signaux de transition $T_2'$.

Un circuit de compensation de la tolérance $\Delta T_p$ sur le décalage relatif de temps des flancs avant des impulsions d'encadrement, équivalent au circuit précédent, peut être réalisé en modifiant la durée de retard du circuit de retard (132) du detecteur de transition décrit à la figure 6, par exemple, en accroissant cette durée de retard d'une valeur double de la durée $\Delta T_p$. Enfin, le circuit de compensation de cette tolérance $\Delta T_p$ peut être disposé en evant ou en amont du circuit de retard (12) du dispositif de détection représenté sur la figure 4.

Le circuit de retard (12) peut être avantageusement réalisé selon une technique numérique. La figure (12) représente un mode de réalisation d'un circuit de retard utilisant un registre à décalage comprenant $(N-1)$ cellules de retard formées chacune de $m$ bascules, toutes identiques, la valeur du nombre $m$ étant donnée par la relation suivante

$$m = \frac{T_F}{\Delta \tau}$$

où $T_F$ est la durée d'une fente de temps des réponses et $\Delta \tau$ est le pouvoir de résolution temporel du dispositif de détection. Ce registre ets incrémenté par un signal d'horloge (CL) asynchrone appliqué à l'entrée d'incrémentation (CP) et la fréquence $F_c$ de ce signal d'horloge est égale à $1/\Delta \tau$.

Dans un radar secondaire, le dispositif de détection des réponses peut être disposé en amont du décodeur actif qui fournit la grandeur des paramètres transmis par les avions interrogés. Les signaux de sortie $(S_0 \ldots S_n)$ indiquant le degré de confiance attribué aux détection des réponses permet de faciliter l'exécution des opérations de corrélation des détections successives. Dans son application aux signaux de réponse, décrite à la figure 1, le pouvoir de résolution temporelle $\Delta \tau$ peut être de l'ordre de 120 ns; le nombre $(N-1)$ de cellules de circuit de retard (12) sera égal à 14 et chacune des cellules constituées de 12 étages élémentaires, à l'exception des première et dernière cellules, comme indiqué précédemment.

Le dispositif de détection trouve son application dans tout système de transmission de données numériques opérant sur la base de trains d'impulsions parenthésés au début et à la fin et, notamment, dans les systèmes de surveillance de l'espace aérien, coopérant avec les aéronefs équipés de répondeurs actifs émettant des réponses codées selon les spécifications recommandées par l'Annexe 10 de l'O.A.C.I. ou les spécifications militaires définies par les spécifications STANAG 5017.

## Revendications

1. Dispositif électronique permettant de détecter les signaux de réponse transmis par des répondeurs radar, ces signaux de réponse comprenant une pluralité d'impulsions de code parenthésées par deux impulsions d'encadrement ($F_1$ et $F_2$) dont le décalage relatif de temps ($T_p$) ets fixe, comprenant:

— un circuit de retard (12) dont la durée de retard est sensiblement égale à $T_p$, ce circuit de retard comportant une pluralité de cellules (12a à 12n) munies de prises;
— deux détecteurs de transition permettant de détecter la position des flancs des impulsions d'encadrement, un premier (13) et un second (14) détecteurs reliés respectivement à l'entrée et à la sortie du circuit de retard;
— deux détecteurs de coïncidence: un premier détecteur (15) relié aux sorties des détecteurs de transition sensibles aux flancs avant des impulsions d'encadrement, un second détecteur (16) relié aux sorties des détecteurs de coïncidence sensibles aux fronts arrière des impulsions d'encadrement;
— deux circuit de mémorisation (17 et 18) permettant de stocker temporairement les valeurs des impulsions de code, ces circuits de mémorisation comportant des entrées de signal communes reliées aux prises des cellules circuit de retard, des entrées de commande reliées respectivement aux sorties des deux détecteurs de coïncidence et des sorties parallèles,

caractérisé en ce qu'il comprend de plus:

— un comparateur numérique (20) connecté entre les sorties des deux circuits de mémorisation (17, 18), ce comparateur numérique comportant une sortie (Z) qui fournit un signal électrique lorsque les contenus de ces circuits de mémorisation ont des valeurs indentiques.

2. Dispositif selon la revendication 1, caractérisé en ce que les durées de retard de la première (12a) et de la dernière (12b) cellules du circuit de retard sont inégales et en ce qu'un circuit de retard (22) dont la durée de retard est sensiblement égale à la différence des durées de retard de ces première et dernière cellules est inséré dans la sortie du premier détecteur de coïncidence.

3. Dispositif selon la revendication 1, caractérisé en ce que l'une des cellules extrêmes du circuit de retard comporte une pluralité de prises connectées à une pluralité de détecteurs de transition (141, 142 et 143) dont les sorties sont connectées à deux portes logiques (143 et 144) du type "OU".

4. Dispositif selon la revendication 1, caractérisé en ce qu'il comprend un circuit logique (21) dont les entrées sont reliées respectivement aux sorties des deux détecteurs de coïncidence (15, 16), ce circuit logique comprenant, notamment, un discriminateur de durée permettant d'évaluer le décalage relatif de temps entre les positions des flancs avant et arrière des impulsions d'encadrement.

5. Dispositif selon la revendication 1, caractérisé en ce qu'il comprend un circuit de transfert (19) permettant de transférer séquentiellement les contenus respectifs du premier et second circuits de mémorisation.

6. Dispositif selon la revendication 1, caractérisé en ce que le circuit de retard (12) comprend un registre à décalage multicellulaire, incrémenté par un signal d'horloge asynchrone, chacune des cellules de ce registre comprenant une pluralité d'étages élémentaires.

7. Utilisation d'un dispositif de détection selon l'une des revendications 1 à 6, dans un radar secondaire comprenant notamment un récepteur qui délivre des signaux de réponse à vidéofréquence, caractérisé en ce que ledit dispositif de détection est connecté en série avec des circuits de mise en forme des signaux de sortie du récepteur.

8. Utilisation d'un dispositif de détection selon l'une des revendication 1 à 6, dans un radar secondaire selon la revendication 9, caractérisé en ce que les circuits de mise en forme des signaux de sortie du récepteur comprennent, connectés en série, un circuit de normalisation de ces signaux de sortie et un circuit de réjection des impulsions de courte durée.

**Patentansprüche**

1. Elektronische Vorrichtung zur Erfassung der Antwortsignale, die von Radar-Antwortsendern ausgestrahlt werden, wobei diese Anwortsignale eine Mehrzahl von Codeimpulsen enthalten, welche durch zwei Rahmenimpulse ($F_1$ und $F_2$) eingerahmt sind, deren relative Zeitverschiebung ($T_p$) fest ist, enthaltend:

— eine Verzögerungsschaltung (12), deren Verzögerungsdauer im wesentlichen gleich $T_p$ ist, wobei diese Verzögerungsschaltung eine Mehrzahl von mit Abgriffen versehenen Zellen (12a bis 12n) enthält;
— zwei Übergangsdetektoren zur Erfassung der Lage der Rahmenimpulsflanken, nämlich einen ersten Detektor (13), der mit dem Eingang der Verzögerungsschaltung verbunden ist, und einen zweiten Detektor (14), der mit ihrem Ausgang verbunden ist;
— zwei Koinzidenzdetektoren: ein erster Detektor (15), der mit den Ausgängen der Übergangsdetektoren verbunden ist, welche auf die Vorderflanken der Rahmeinimpulse ansprechen, und ein zweiter Detektor (16), der mit den Ausgängen der Koinzidenzdetektoren verbunden ist, welche auf die Rückflanken der Rahmenimpulse ansprechen;
— zwei Speicherschaltungen (17 und 18) zur vorübergehenden Speicherung der Codeimpulswerte, wobei diese Speicherschaltungen gemeinsame, mit den Zellen der Verzögerungsschaltung verbundene Signaleingänge, jeweils mit den Ausgängen der zwei Koinzidenzdetektoren verbundene Steuereingänge nd parallele Ausgänge aufweisen,

dadurch gekennzeichnet, daß sie ferner umfaßt:

— einen digitalen Komparator (20), der zwischen die Ausgänge der zwei Speicherschaltungen (17, 18) geschaltet ist, wobei dieser digitale Komparator einen Ausgang (Z) enthält, der ein elektrisches Signal liefert, wenn die Inhalte dieser Speicherschaltungen identische Werte besitzen.

2. Vorrichtung nach Anspruch 1, dadurch gekennzeichnet, daß die Verzögerungsdauern der ersten (12a) und der letzten (12b) Zelle der Verzögerungsschaltung ungleich sind und daß eine Verzögerungsschaltung (22), deren Verzögerungsdauer im wesentlichen gleich der Differenz der Verzögerungsdauern der ersten Zelle und der letzten Zelle ist, in den Ausgang des ersten Koinzidenzdetektors eingefügt ist.

3. Vorrichtung nach Anspruch 1, dadurch gekennzeichnet, daß eine der äußersten Zellen der Verzögerungsschaltung eine Mehrzahl von Abgriffen aufweist, welche an eine Mehrzahl von Übergangsdetektoren (141, 142 und 143) angeschlossen sind, deren Auggänge mit zwei logischen Torschaltungen (143 und 144) von Typ "OR" verbunden sind.

4. Vorrichtung nach Anspruch 1, dadurch gekennzeichnet, daß sie eine Logikschaltung (21) umfaßt, deren Eingänge jeweils mit den Ausgängen der zwei Koinzidenzdetektoren (15, 16) verbunden sind, wobei diese Logikschaltung insbesondere einen Dauer-Diskriminator enthält, der es ermöglicht, die relative Zeitverschiebung zwischen den Lagen der Vorderflanke und der Rückflanke der Rahmenimpulse zu ermitteln.

5. Vorrichtung nach Anspruch 1, dadurch gekennzeichnet, daß sie eine Überführsschaltung (19) enthält, die es emöglicht, sequenziell die jeweiligen Inhalte der ersten und der zweiten Speicherschaltung zu überführen.

6. Vorrichtung nach Anspruch 1, dadurch gekennzeichnet, daß die Verzögerungsschaltung (12) ein mehrstufiges Scheiberegister enthält, welches durch ein asynchrones Taktsignal inkrementiert wird, wobei jede dieser Registerstufen eine Mehrzahl von elementaren Stufen enthält.

7. Verwendung einer Detektorvorrichtung nach einem der Ansprüche 1 bis 6 in einem Sekundärradar, insbesondere mit einem Empfänger, welcher videofrequente Antwortsignale abgibt, dadurch gekennzeichnet, daß diese Detektorvorrichtung in Reihe mit Empfängerausgangssignal-Formungs-schaltungenge schal-
-tet ist.

8. Verwendung einer Detektorvorrichtung nach einem der Ansprüche 1 bis 6 in einem Sekundärradar nach Anspruch 9, dadurch gekennzeichnet, daß die Empfängerausgangssignal-Formgebungsschaltungen in Reihe miteinander geschaltet eine Normierschaltung zum Normieren dieser Ausgangssignale und eine Schaltung zur Unterdrückung von Impulsen kurzer Dauer enthalten.

**Claims**

1. Electronic device for the detection of response signals transmitted by radar transponders, these response signals comprising a plurality of code pulses framed by two framing pulses ($F_1$ and $F_2$) the relative time shift ($T_p$) of which is fixed, comprising:

— a delay circuit (12) the delay duration of which is substantially equal to $T_p$, this delay circuit comprising a plurality of cells (12a to 12n) provided with taps;
— two transition detectors permitting to detect the position of the framing pulse edges, first (13) and second (14) detectors connected to the input and to the output of the delay circuit, respectively;
— two coincidence detectors: a first detector (15) connected to the outputs of the transition detectors responsive to the leading edges of the framing pulses, a second detector (16) connected to the outputs of the coincidence detectors responsive to the trailing edges of the framing pulses;
— two storing circuits (17 and 18) for temporarily storing the code pulse values, these storing circuits comprising common input signal connected to the taps of the cells of the delay circuit, control inputs respectively connected to the outputs of the two coincidence detectors and parallel outputs,

characterized in that it comprises in addition:

— a digital comparator (20) connected between the outputs of the two storing circuits (17, 18), this digital comparator comprising an output (Z) supplying an electric signal when the contents of these storing circuits have identical values.

2. Device according to claim 1, characterized in that the delay durations of the first (12a) and the last (12b) cells of the delay circuit are unequal, and in that a delay circuit (22) the delay duration of which is substantially equal to the difference of the delay durations of these first and last cells is inserted into the output of the first coincidence detector.

3. Device according to claim 1, characterized in that one of the extreme cells of the delay circuit comprises a plurality of taps connected to a plurality of transition detectors (141, 142 and 143) the outputs of which are connected to two logic gates (143 and 144) of "OR" type.

4. Device according to claim 1, characterized in that it comprises a logic circuit (21) the inputs of which are respectively connected to the outputs of two coincidence detectors (15, 16), this logic circuit comprising, in particular, a duration discriminator permitting to evaluate the relative time shift between the positions of the leading and trailing edges of the framing pulses.

5. Device according to claim 1, characterized in that it comprises a transfer circuit (19) for sequentially transferring the respective contents of the first and second storing circuits.

6. Device according to claim 1, characterized in that the delay circuit (12) comprises a plural stage shift register incremented by an asynchronous clock signal, each of the cells of this register comprising a plurality of elementary stages.

7. Use of a detector device according to any of claims 1 to 6 in a secondary radar comprising, in particular, a receiver supplying video frequency response signals, characterized in that said detector device is connected in series with shaping circuits for the receiver output signals.

8. Use of a detector device according to any of claims 1 to 6 in a secondary radar according to claim 9, characterized in that the shaping circuits of the receiver output signals comprise, connected in series, a normalizing circuit for these output signals and a circuit for the rejection of pulses having short durations.

FiG_1

FiG_9-a

0 055 151

# FIG_2

# FIG_3

FIG_4

# FIG_5

# FIG_6

# FIG_7

FiG_8

FIG_9-b

0 055 151

FIG_9-c

FIG_5-d

**0 055 151**

FIG_10

FIG_11

FIG_12

9